# EUROPEAN PATENT SPECIFICATION

(11) **EP 1 873 495 B1**
(45) Date of publication and mention of the grant of the patent: **27.07.2011**
(21) Application number: 07110887.2
(22) Date of filing: 22.06.2007
(51) Int. Cl.: G01C 21/36, G06F 17/30

(54) **Navigation apparatus with three-dimensional route guidance**
Navigationsvorrichtung
Appareil de navigation

(30) Priority: 30.06.2006 JP 2006182794
(43) Date of publication of application: 02.01.2008
(73) Proprietor: Aisin AW Co., Ltd., Fujii-cho Anjo-shi, Aichi 444-1192 (JP)
(72) Inventor: Emoto, Michiko, Okazaki-shi Aichi 444-8564 (JP); Miyamoto, Shinya, Sapporo 004-0051 (JP); Yamamoto, Kazuyoshi, Sapporo 004-0051 (JP)
(74) Representative: TBK

(56) References cited:
- EP-A- 1 584 897
- EP-A1- 0 579 451
- EP-A2- 1 085 299
- US-B1- 6 311 126
- US-B2- 6 944 537

## Description

The present invention relates to a navigation apparatus for providing a three dimensional movie on a route guidance screen.

In recent years, navigation apparatuses for aiding in the navigation of vehicles have become very popular. Such a navigation apparatus includes searching means for searching for a route from a starting point to a destination, detecting means for detecting a current position of a vehicle by means of a GPS (Global Positioning System) and/or a gyro, and display means for displaying the route to the destination and the current position of the vehicle. It is important for such a navigation apparatus to provide an understandable display to a driver of the vehicle. For example, a navigation apparatus for a vehicle disclosed in Japanese Unexamined Patent Application Publication No. 10-115529 provides a three dimensional movie which is presented from the viewpoint of a driver.

The navigation apparatus disclosed in the patent document provides guidance regarding an intersection by drawing a route on a 3D map in which structures, such as buildings, are displayed. When a two-dimensional map is used, the driver needs to figure out how the two dimensional map corresponds to the real view. However, the navigation apparatus with the structure disclosed in the patent document displays a 3D movie, so that it is easier for the driver to compare the map with the real view.

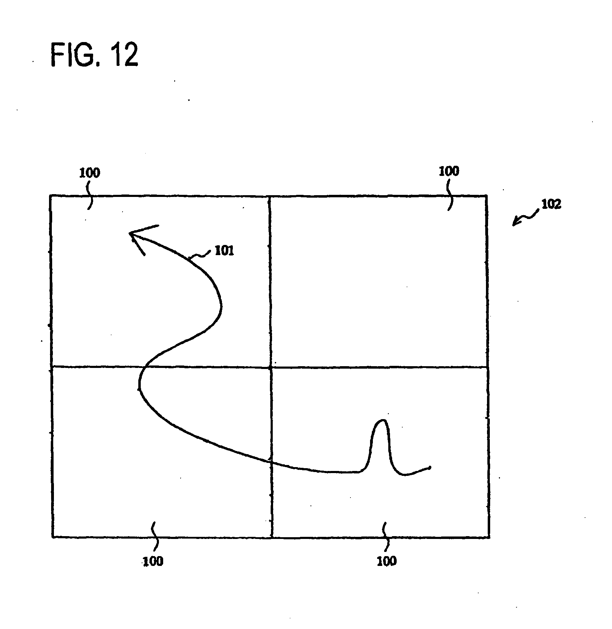

As shown in FIG. 12, to generate the 3D movie, the navigation apparatus measures off 3D map data 102 in rectangular regions (each rectangular region is denoted by reference numeral 100 and all of the rectangular regions include a route 101). The navigation apparatus selects one of the rectangular regions 100 corresponding to the current position of the vehicle, reads data of the rectangular region 100 stored in a memory, and generates the 3D movie on the basis of the read data.

However, the volume of the 3D map data is so large that a considerable amount of the memory of the navigation apparatus is required to store the data when the navigation apparatus reads the 3D map data on a region-by-region. The amount of memory installed in the navigation apparatus which is mounted in the vehicle is limited. However, the navigation apparatus mounted in the vehicle is required to provide a movie that is updated in real time along with the motion of the vehicle. In reality however, it is difficult to make good use such a navigation apparatus in a vehicle.

EP-A-1 584 897 discloses a navigation apparatus which is capable of obtaining 3D map data corresponding to a region including a guidance point. That is, the region is defined as being capable of displaying three-dimensional data.

US-B2-6 944 537 relates to an apparatus and method for a route instruction service with a three-dimensional model. Herein, determining which data of a 3D model is read out and transmitted with priority to a user is described.

US-B1-6 311 126 discloses a moving body map information display system that is capable of extracting and displaying the desired map information correctly and easily without changing the transition point and the route that have been set by an operator.

It is the object of the present invention to provide a navigation apparatus for providing route guidance by means of a 3D movie while requiring use of a smaller amount of memory.

This object is achieved by the navigation apparatus according to claim 1.

Further advantageous developments of the navigation apparatus are set out in the dependent claims.

The navigation apparatus with the structure described in the claims sets a region along a route and reads 3D map data corresponding to the set region, so that the route guidance by a 3D movie may be provided using less memory.

FIG. 1 is a diagram showing an outline of a current embodiment of the invention.

FIG. 2 is a diagram showing a hardware structure of a navigation apparatus according to the current embodiment of the invention.

FIG. 3 is a diagram showing a structure of a road guidance system according to the current embodiment of the invention.

FIG. 4 is a diagram showing a guidance screen in the navigation apparatus according to the current embodiment of the invention.

FIG. 5 is a diagram showing a coordinate system used in the navigation apparatus according to the current embodiment of the invention.

FIG. 6 is a diagram showing a method of setting a drawing reference point according to the current embodiment of the invention.

FIG. 7 is a diagram showing a procedure to set a region for which data is to be read according to the current embodiment of the invention.

FIG. 8 is a diagram showing an example of the regions for which data is to be read.

FIG. 9 is a diagram showing a method of determining structures within the region for which data is to be read.

FIG. 10 is a flowchart showing a procedure to provide route guidance by means of a cut-in movie according to the current embodiment of the invention.

FIG. 11 is a flowchart showing a modified example of a procedure to provide route guidance by means of the cut-in movie.

FIG. 12 is a diagram showing a conventional navigation apparatus.

### (1) OUTLINE OF EMBODIMENT

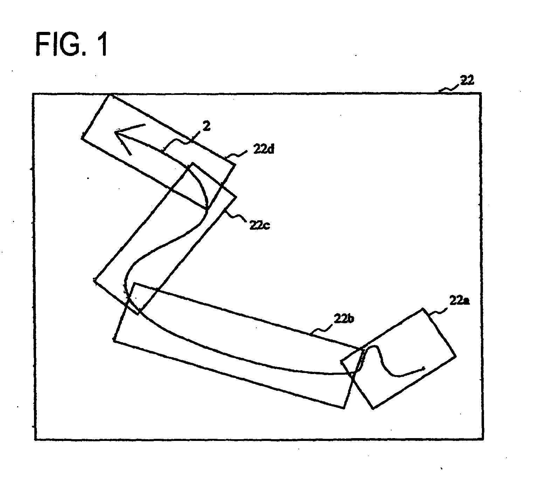

As shown in FIG. 1, in case of an area surrounding an intersection for which guidance is to be given (not shown), a navigation apparatus according to an embodiment of the present invention sets rectangular regions for which data is to be read 22a through 22d along a route 2. Each of the rectangular regions is set as having a center line which passes through two points set on the route 2. The navigation apparatus determines whether any structures in 3D map data 22 are located within the region for which data is to be read. When any structure is located within the region for which data is to be read, data of the structure within the region for which data is to be read is read out. As described above, the navigation apparatus sets the region for which data is to be read on the basis of the route 2 and does not read unnecessary data of structures outside of the region for which data is to be read, so that the navigation apparatus may reduce usage of the memory while still obtaining necessary data that is sufficient for providing guidance.

### (2) DETAIL OF THE EMBODIMENT

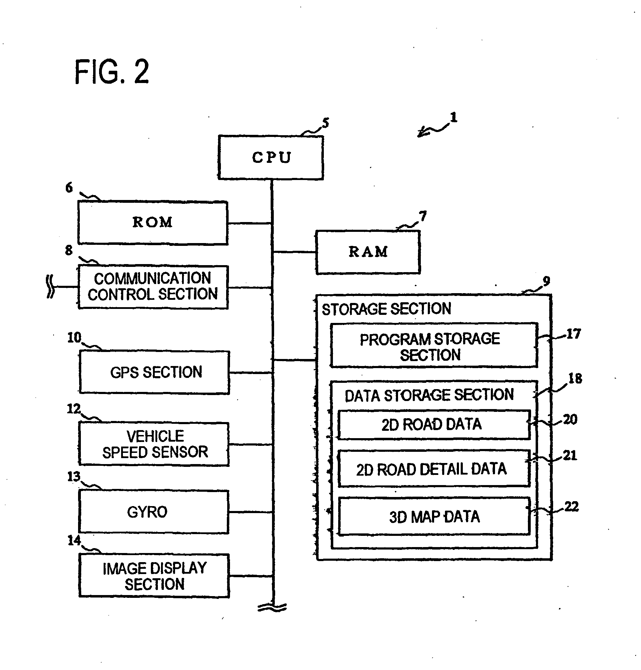

FIG. 2 is a diagram showing an example of the hardware structure of the navigation apparatus according to the current embodiment of the invention. The navigation apparatus 1 may include a CPU (Central Processing Unit) 5, a ROM (Read Only Memory) 6, a RAM (Random Access Memory) 7, a communication control section 8, a storage section 9, a GPS section 10, a vehicle speed sensor 12, a gyro 13, and an image display section 14, and those sections are connected with each other by a bus line. The navigation apparatus provides route guidance to a set destination to a driver of a vehicle in which the navigation apparatus is mounted.

The CPU 5 is a central processing device and executes various information processing operations such as route searching and/or route guidance and controls a communication system 1 on the basis of programs stored in the ROM 6, the RAM 7, the storage section 9, and so on. The ROM 6 is a read only memory and stores a basic program and parameters for operating the navigation apparatus 1. The RAM 7 is a random access memory enabling writing/reading of data. For example, the RAM 7 provides a working area when the CPU 5 executes various information processing operations. Map data to be displayed is read out from the storage section 9 and stored in the RAM 7. The communication control section 8 is a functional portion of the navigation apparatus 1 enabling connection to a network such as the Internet. The navigation apparatus 1 may communicate with an external server through the communication control section 8.

The storage section 9 is a storage device having a large amount of memory such as, for example, a semiconductor memory, a hard disk, an optical disk, and/or a magneto optical disk. The storage section 9 may include a program storage section 17 and a data storage section 18. The program storage section 17 may store, for example, an OS (Operating System) as a fundamental program for operating the navigation apparatus 1 and/or a route guidance program for making the CPU 5 perform route guidance processing.

The data storage section 18 may store map data which may include two dimensional road data 20, two dimensional road detail data 21, and/or three dimensional map data 22. The 2D road data 20 is map data showing a road network by means of nodes and links which connect the nodes. The 2D road data 20 may be used, for example, when the CPU 5 searches for a route from a starting point to a destination.

The 2D road detail data 21 is map data used when the CPU 5 displays a 2D map on an image display section 14. The 2D road detail data 21 may include traffic lane information and/or various types of facility information such as information on restaurants, gas stations, schools, and/or factories, so that it may be possible to provide detailed area information to the driver. The 3D map data 22 is 3D data for displaying a computer-generated street map using 3D data including 3D information on structures. The term "structures" here refers to all elements to be displayed on the map such as roads, railroads, buildings, and/or the ground. An attribute is attached to each element such as, "road", "railroad", "building", and/or "ground".

The GPS section 10 receives a GPS signal provided by a GPS satellite in orbit and transfers the signal to the CPU 5. The vehicle speed sensor 12 is a sensor for detecting the vehicle speed. The gyro 13 is a sensor for detecting the vehicle angular velocity. The CPU 5 may calculate the current vehicle travel condition which includes information such as the latitude and longitude of the current position, the vehicle travel direction, the vehicle speed, the acceleration, the volution by means of the GPS signal, the vehicle speed, and/or the angular velocity.

The image display section 14 may include a display device such as an LCD monitor display, a plasma display, or another type of display, and may display the guidance screen which is created by the CPU 5 using, for example, the 2D road detail data 21 and/or the 3D map data 22. The image display section 14 may further include a touch panel so that the driver may touch a menu displayed on the display monitor and set a destination and/or information in the navigation apparatus 1. Therefore, the image display section 14 may function as a destination set accepting means for accepting the setting of a destination. Further, the navigation apparatus 1 may include an audio output device (not shown) and provide audio route guidance beside the visual route guidance on the guidance screen.

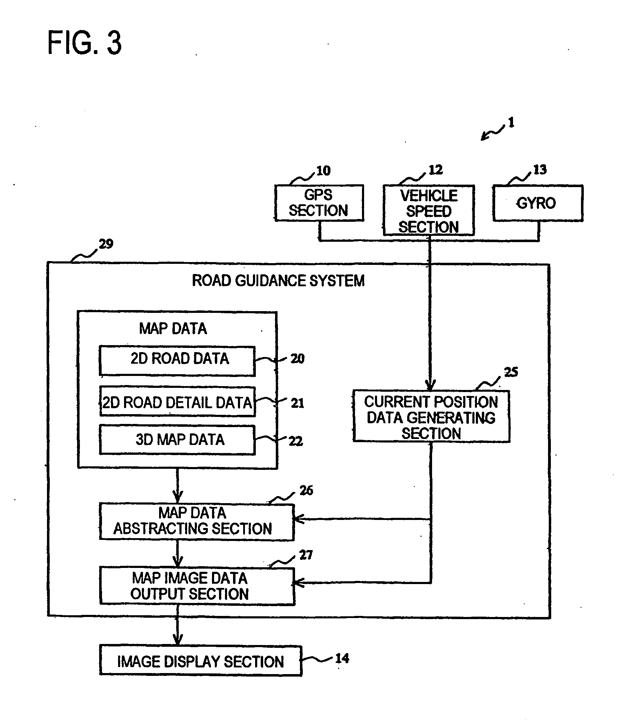

FIG. 3 is a diagram showing an example of the system structure of the road guidance system. The road guidance system 29 functions when the CPU 5 executes the route guidance program which is stored in the program storage section 17. The current position data generating section 25 may generate current vehicle position data on the basis of the GPS signal provided by the GPS section 10 and detection values obtained by the vehicle speed sensor 12 and the gyro 13. The current position data may include information according to the current vehicle travel condition such as the latitude and longitude of the current position, the travel direction, the vehicle speed, the acceleration, and/or the angular velocity.

The map data abstracting section 26 may receive the current position data from the current position data generating section 25 and abstract necessary map data from the 2D road detail data 21 and the 3D map data 22 to provide guidance at the current position. As described later, according to the 3D map data 22, the map data abstracting section 26 sets the region for which data is to be read along the route and abstracts structures which are located within the region for which data is to be read from among all structures in the 3D map data 22.

The map image data output section 27 may generate map image data for guidance and output the image on the image display section 14 on the basis of the 2D road detail data and the 3D map data abstracted by the map data abstracting section 26. The map image data output section 27 may obtain current position data from the current position data generating section 25 and display the 2D movie and/or the 3D movie for showing the current vehicle position and the travel direction on the basis of the received data.

For the 3D movie, the map image data output section 27 sets a viewpoint on the basis of the current position obtained by the current position data generating section 25 and calculates 2D image data which is for drawing the view from the viewpoint with perspective by means of 3D map data. Then the map image data output section 27 creates pieces of real-time 2D image data one after another in accordance with the motion of the viewpoint. The image display section 14 displays the series of pieces of generated 2D image data in sequence, that is, the image display section 14 displays the 3D movie. Thereby, the map image data output section 27 may function as 3D movie generating means for generating a 3D movie which has the certain viewpoint on the basis of the 3D map data 22.

Note that, the term "movie" here includes an animation with a smooth motion and images which are displayed at predetermined intervals so that the driver may understand the continuity of the images. The smoother the movie displayed, the greater the amount of the memory used and the longer the processing time of the CPU 5. By using a series of images instead of a smooth motion animation, it may be possible to reduce the processing pressure load of the navigation apparatus 1. Each of the images displayed in series has an individual viewpoint in accordance with the movement of the current position. An identical relative position with respect to the position of the moving vehicle may be set for each of the images. However, according to the current embodiment, the relative position with respect to the position of the moving vehicle is altered continually in accordance with the motion of the current position.

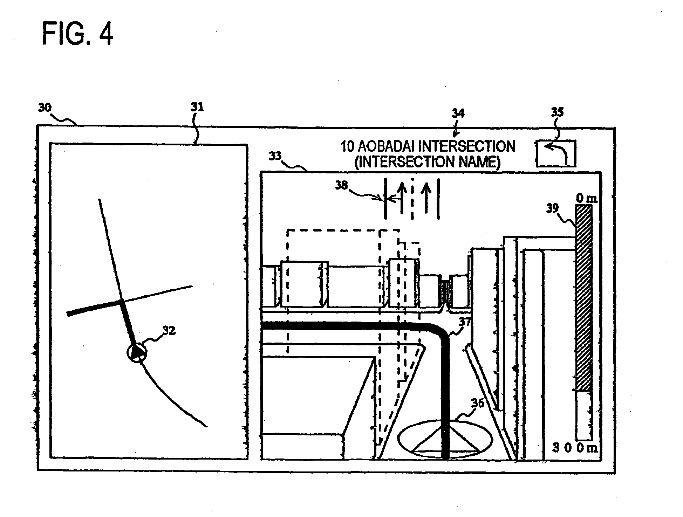

FIG. 4 is a diagram showing an example of the guidance screen displayed on the image display section 14. A guidance screen 30 may include a 2D map screen 31 and a 3D map screen 33. The 2D map screen 31 is created on the basis of the 2D road detail data 21 and the 3D map screen 33 is created on the basis of the 3D map data 22. Note that, there are various types of display modes for the guidance screen. It may be possible to display the 2D map screen 31 on the full guidance screen or to display the enlarged 2D map instead of the 3D map screen 33.

The 2D map which shows an area surrounding the current vehicle position is displayed on the 2D map screen 31 and the current vehicle position and the travel direction are symbolized as a vehicle icon 32 on the map. Further, the view from the vehicle window is computer generated and displayed on the 3D map screen 33 as the 3D movie. The sight line of the movie may be changed and the sight line of the movie mainly faces the travel direction of the vehicle. Further, the viewpoint of the movie is set so as to be from the upper side of the vehicle. The current vehicle position and the travel direction are symbolized as a vehicle icon 36 on the 3D map. Note that, the viewpoint of the movie may be changed.

Further, a route 37 and/or traffic lane information 38 are displayed on the 3D map screen 33. The driver may determine which way should be selected and whether he/she should change traffic lanes on the basis of the displayed information. A distance indicator 39 is also displayed on the 3D map screen 33. The distance indicator 39 shows a distance to an intersection at which the driver wants to make a turn. The longest distance displayable to an intersection for which guidance is to be given (300 m in this embodiment) is set as the entire length of the indicator and the actual distance to the intersection is shown on the indicator as corresponding to the length of the indicator. On the upper side of the 3D map screen 33, the intersection name 34 and an arrow 35 indicating the turning direction at the intersection may be displayed.

In normal times, the navigation apparatus 1 displays the 2D map screen 31 on the full guidance screen 30. When the vehicle approaches an intersection for which guidance is to be given, the 3D map screen 33 is activated and keeps being displayed until the vehicle passes through the intersection. The computer designed 3D movie, which is used by the navigation apparatus 1 during the route guidance when the vehicle approaches an intersection for which guidance is to be given, is called "a cut-in movie".

The cut-in movie is one of enlarged images showing the intersection. The driver may set the cut-in movie to be visible or invisible. The cut-in movie is displayed while the vehicle is traveling on a general road. When the vehicle is traveling on an expressway, the guidance is provided via the 2D map screen 31 as usual, not with the cut-in movie. The cut-in movie on the screen may be displayed with, for example, VGA (Video Graphics Array) resolution (512x480 dots).

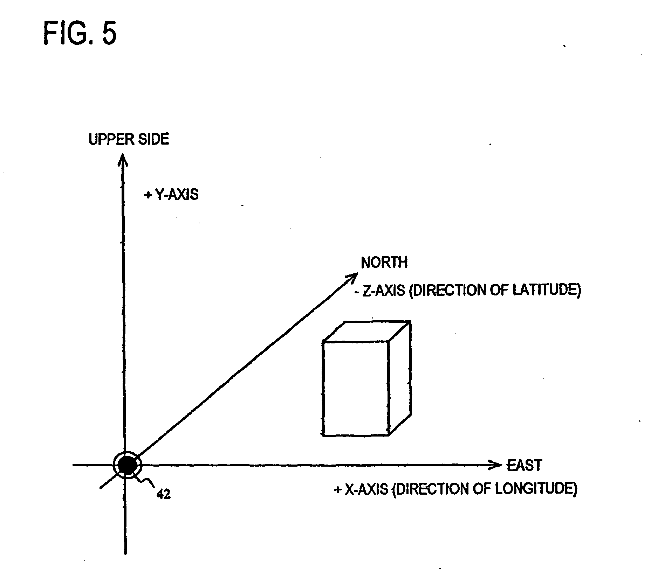

The function of generating the cut-in movie included in the navigation apparatus 1 will be described with reference to FIGs. 5 through 9. The generating function is performed by the map data abstracting section 26. FIG. 5 is a diagram showing the coordinate system used in the navigation apparatus 1. The navigation apparatus 1 sets a drawing reference point 42 as the origin point of the coordinate system and sets the direction of the longitude along the X-axis. The positive direction along the X-axis is in the easterly direction. The direction of the latitude is set along the Z-axis and the negative direction along the Z-axis is in the northerly direction. Further, the direction of the height is set along the Y-axis and the positive direction along the Y-axis is in the upward direction. The drawing reference point 42 is a reference point for setting the region for which data is to be read by the map data abstracting section 26. According to the current embodiment of the invention, the drawing reference point works as a specified point on the traveling route. That is, the navigation apparatus 1 may include reference point setting means for setting the specified reference point on the route. According to the current embodiment of the invention, for example, a point within the intersection on the route may be set as the specified point (the drawing reference point). More specifically, the center point at the intersection, an intersection node, an alternative point for the intersection node or the center point of the intersection (which is the closest point to the intersection node or the center point of the intersection) (in case of 3D network data), or a center point of a region where the current traffic lane and another traffic lane cross. Further, when the specified point is set at any point but intersections on the route, for example, at a point on a curve, the specified point (the drawing reference point) is set at the center point of the curve, at the point which has the largest curvature, or on a common node for two adjacent links on the curve, provided that the angle between the two adjacent links is the smallest angle.

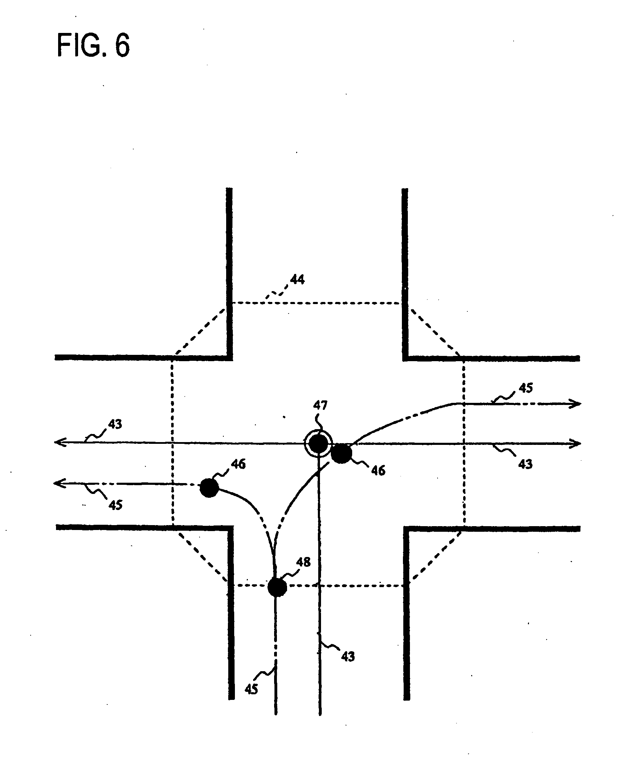

The method of setting the drawing reference point will be described with reference to FIG. 6. The navigation apparatus 1 sets the drawing reference point within an intersection guidance area 44 of the intersection for which guidance is to be given. The term "intersection for which guidance is to be given" used here means the intersection for which guidance is to be given by means of the cut-in movie such as an intersection at which the vehicle turns right/left, a Y-shaped intersection, a five-road intersection, or a complicated intersection which is difficult to describe to the driver. The navigation apparatus 1 may preset a search condition for the intersection for which guidance is to be given. For example, the search condition that the vehicle turns right/left at the intersection may be preset, so that the navigation apparatus 1 may detect only intersections which meet that condition. Meanwhile, it may be possible to specify an attribute for each intersection to determine whether guidance should be given for the intersection or not.

Generally, the navigation apparatus 1 sets the route on the links 43 and sets the drawing reference point 47 on the node of any of the links 43. Another method for setting the drawing reference point may be used. For example, the center point of the intersection guidance area 44 may be found and set as the drawing reference point. In accordance with the turn at the intersection, the position of the viewpoint may be changed so that it may be easier for the driver to understand the cut-in movie. In this case, the navigation apparatus 1 uses the drawing reference point 47 as a viewpoint switch reference point.

Note that, the route may be set by means of road detail data such as traffic lane data (called 3D network data). The route is set on the node and the route is set on the center of the road. However, in case of using road detail data, the route may be set on the traffic lane on which the vehicle is currently traveling. Road detail data may include alternative points for drawing a curving guide line used during the turn. When the route is set using such a detailed road map, the navigation apparatus 1 sets the closest alternative point to the node as the drawing reference point. The navigation apparatus 1 further sets the entering point where the route is entering the intersection guidance area 44 as the viewpoint switch reference point. When the route is displayed on left side of the center line of the road, the guide line may be displayed on the left side of the road, if needed.

In the figures, two of the drawing reference points 46 are set at the alternative points on the routes 45. Note that, in the figures, two of the drawing reference points 46 are set because the possible travel direction of the vehicle here is twofold, that is, the vehicle could turn right or left. The entering point at which the route 45 enters the intersection guidance area 44 is set as the viewpoint switch reference point 48. Note that, as an additional condition, when the distance between the entering point to the intersection guidance area 44 and the drawing reference point 46 is equal to or greater than a predetermined distance (for example, equal to or greater than 40 m), a point which is the predetermined distance away from the drawing reference point 46 may be set as the viewpoint switch reference point.

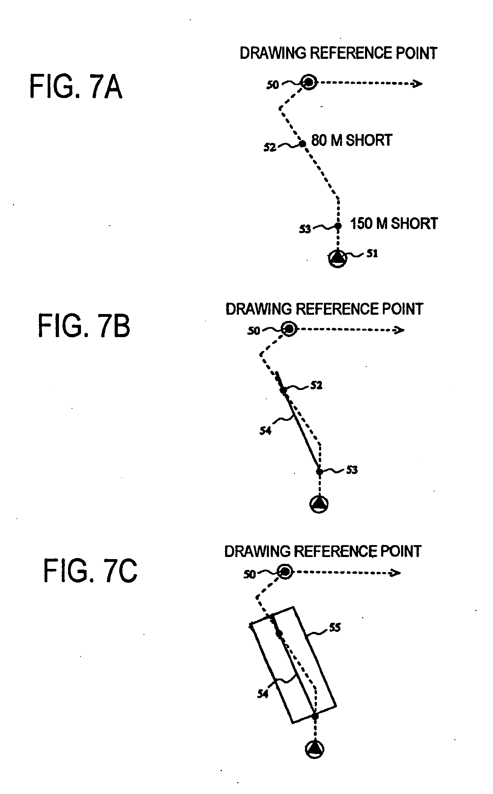

Next, a method of setting the region for which data is to be read will be described with reference to FIG. 7. First, the navigation apparatus 1 sets a first point 52 and a second point 53 in front of the current position of the vehicle 51 and the drawing reference point 50 (this is also the origin point of the coordinates) on the route (indicated by a wavy line) as shown in FIG. 7A. The first point 52 is a point which is a first distance (80 m in this embodiment) away from the drawing reference point 50 along the route. The second point 53 is a point which is a second distance (150 m in this embodiment) away from the drawing reference point 50 along the route. The second distance is greater than the first distance. Note that, according to the current embodiment of the invention, the first and second distances are set as distances along the route. However, the first and second distances may be set as straight line distances, if desired.

According to the current embodiment, the first point is set at a point which is exactly the first distance away from the reference point and the second point is set at a point which is exactly the second distance away from the reference point on the route. However, the first point may be set on the node which is close to a point the first distance away from the drawing reference point by means of 2D road data 20. Likewise, the second point may be set on a node which is close to the point the second distance away from the drawing reference point by means of 2D road data 20 (for example, the nearest node or the nearest node from a point which is in the opposite direction from the drawing reference point and is the first/second distance away from the drawing reference point). In this case, a node which is about 80 m distance away from the drawing reference point 50 is set as the first point and a node which is about 150 m distance away from the drawing reference point 50 is set as the second point. The route may be curved through the node so that the next node to the first point may be set as the second point.

As described later, the navigation apparatus 1 sets the region for which data is to be read on the basis of the straight line connecting the first point and the second point. Thereby, the navigation apparatus 1 may set the region for which data is to be read along the route. The view area of the driver moves along the route. When the regions for which data is to be read are set along the route, it is possible not to read 3D map data of unnecessary areas for the driver.

Another modified embodiment is possible. For example, the first point may be set and the region for which data is to be read may be set on the basis of the line which passes through the first point and is in parallel with the link. As described above, the navigation apparatus 1 may include a point setting device for setting at least one point on the route.

Next, the navigation apparatus 1 sets the line 54 which connects the first point 52 to the second point 53 as shown in FIG. 7B. Then the navigation apparatus 1 extends the line 54 a predetermined distance more (10 m in this example) in the direction of the first point 52 (the travel direction of the vehicle).

Next, as shown in FIG. 7C, the navigation apparatus 1 generates a rectangle whose center line is the extended line 54 and which has a predetermined width (the distance between the center line and each of the sides of the rectangle is 30 m in this example). The rectangle 55 is set as the region for which data is to be read. The center line 54 is extended the predetermined distance in the travel direction of the vehicle, so that another region for which data is to be read (not shown) formed in front of this region for which data is to be read 55 is overlapped with the region for which data is to be read 55. As a result, the read 3D map data is not discontinued and the 3D map data may be abstracted without missing any part along the route.

As described above, the navigation apparatus 1 may include a region setting device for setting a region which is along the route and which includes preset points (the first point and the second point) as reference points. The region setting device sets the region by using the straight line connecting the first point to the second point as the center line of the rectangular area. Further, the center line is extended in the vehicle travel direction, so that the region setting device sets the side of the rectangle facing the first point a predetermined distance away from the first point in the travel direction of the vehicle.

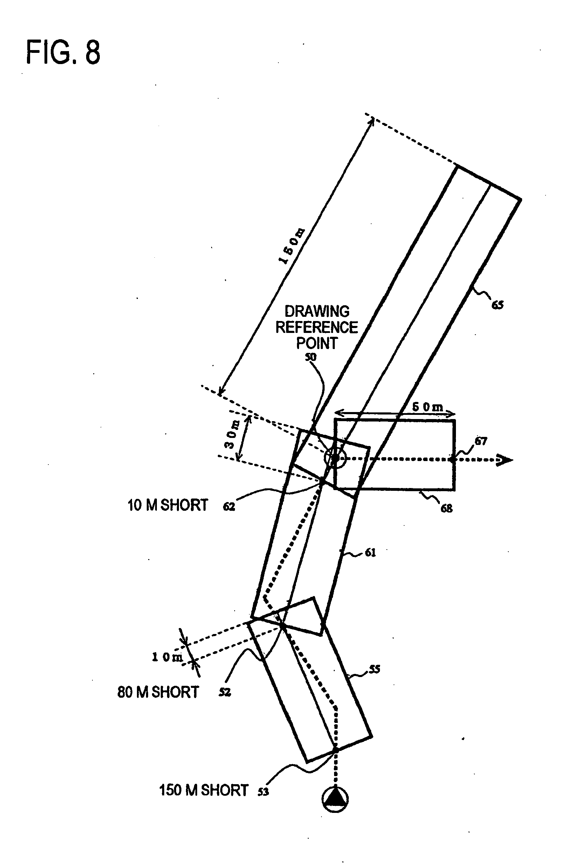

FIG. 8 is a diagram showing an example of the region for which data is to be read which is set for the intersection for which guidance is to be given. To make the region for which data is to be read into as a shape as similar as possible to the shape of the route, the navigation apparatus 1 sets four regions for which data is to be read which are 55, 61, 65, and 68 corresponding to the intersection for which guidance is to be given. When setting the region for which data is to be read 61, the navigation apparatus 1 sets the first point 62 at a point 10 m short of the drawing reference point 50 along the route. The first point 52 is used as the second point for this region for which data is to be read 61 which has a predetermined width (the distance between the center line and each side of the rectangle is 30 m in this example). The side of the region for which data is to be read 61 in the travel direction is located at the point where the center line is extended 30 m from the first point 62 in the travel direction.

The center line of the region for which data is to be read 61 is extended more than the center line of the region for which data is to be read 55 because the end side of the region for which data is to be read 61 leading the traveling is near the intersection for which guidance is to be given. The travel direction of the vehicle might change at the intersection for which guidance is to be given. Therefore, the more the center line is extended, the wider the crossover becomes, according to the regions for which data is to be read. As a result, necessary 3D map data for the intersection for which guidance is to be given may be obtained reliably. More specifically, even when the vehicle turns around significantly at an intersection, the wider region for which data is to be read is obtained so that the 3D map data for the region may be read fully and displayed on the guidance screen.

The region for which data is to be read 65 is a rectangle in which the drawing reference point 50 is set as the first point and has the center line connecting the drawing reference point 50 to the first point 62 which functions as the second point this time. The left and right side of tHe rectangular area are each 30 m away from the center line. The center line extends 150 m from the drawing reference point toward the entering direction. The driver has a good view in the travel direction at the intersection, so that the navigation apparatus 1 sets a larger region for which data is to be read in the travel direction. As described above, when the first point is at the intersection, the navigation apparatus 1 sets a longer predetermined distance (extending length) for setting the side of the rectangle facing the first point than the other predetermined distances for the other rectangular areas.

According to the region for which data is to be read 68, the navigation apparatus 1 sets the drawing reference point 50 as the first point. The navigation apparatus 1 further sets a point which is 50 m away from the drawing reference point 50 along the route as the second point. Then the region for which data is to be read 68 has the center line passing through the first point and the second point. The left and right side of the rectangular area are each 30 m away from the center line. The navigation apparatus 1 does not extend the center line of the region for which data is to be read 68 which includes a view area which the driver may look at after the turn because the navigation apparatus 1 terminates the cut-in movie right after the vehicle turns at the intersection for which guidance is to be given. More specifically, the navigation apparatus 1 does not extend the unnecessary center line of the region for which data is to be read, so that it may be possible to reduce the memory usage for reading 3D map data.

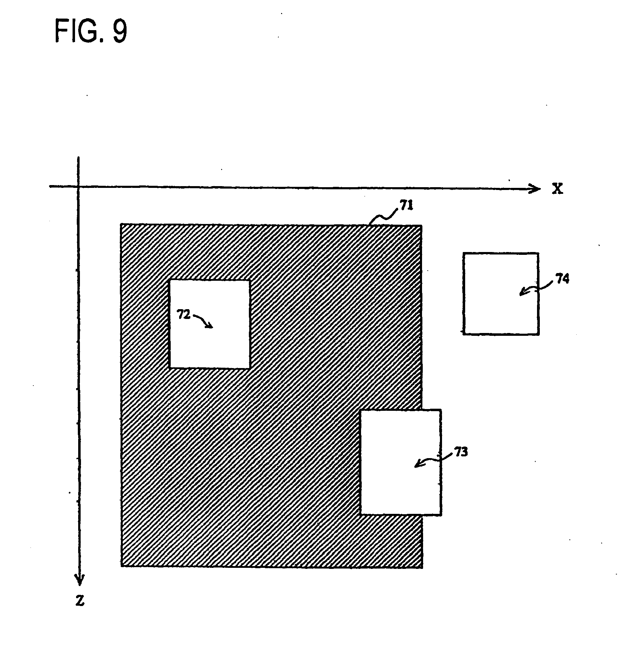

Next, a determination of a structure included in the region for which data is to be read will be described with reference to FIG. 9. The structure which is determined that that is located within the region for which data is to be read is abstracted from the 3D map data 22. The navigation apparatus 1 (the map data abstracting section 26) calculates X and Z components of a structure and sets a rectangle corresponding to the structure (by using the smallest X and Z components and the largest X and Z components of the structure) on the X-Z plane. When a part or the whole area of the rectangle is included within the region for which data is to be read, it is determined that the structure is included within the region for which data is to be read. When the rectangular area is not included within the region for which data is to be read, it is determined that the structure is not included within the region for which data is to be read.

According to the example in the Figure, the entire rectangle 72 is included within the region for which data is to be read 71 and a part of the rectangle 73 is included within the region for which data is to be read 71, so that structures within two of the rectangular areas are abstracted. Meanwhile, any part or the entire area of the rectangle 74 is not included within the region for which data is to be read 71, so that structures corresponding to the rectangular area 74 are not abstracted. As described above, the navigation apparatus 1 includes a determining device for determining whether a structure found in the 3D map data is included within the region for which data is to be read. The navigation apparatus 1 further includes a map data obtaining device for obtaining the 3D map data 22 regarding the preset region for which data is to be read, so that it is determined by the determination device that the obtained data is for structures within the region for which data is to be read.

Another condition to determine may be set for reducing the number of the 3D map data to be read and reducing the memory usage. The type of structures to be abstracted may be limited and the memory usage may be reduced. For example, according to the structure which could be any type of structures but a road, a condition to abstract the structure may be set, that is, when the smallest sphere involving the entire structure is set and the diameter of the sphere is equal to or greater than a predetermined value (for example 100 m), and further when at least a part of the sphere is located within a rectangular space whose bottom is the data region for which data is to be read, the structure may be abstracted. As a result, small structures whose diameters of spheres as defined above are less than a predetermined value (that is, small structures enough to be ignored by the driver) are not read, so that the memory usage may be reduced. The types of structures here refer to attributes attached to products such as a road, a railway, and a building. Further, it may be possible to set conditions on the navigation apparatus 1 only to read structures whose attributes are "road" among all of the structures within the region for which data is to be read.

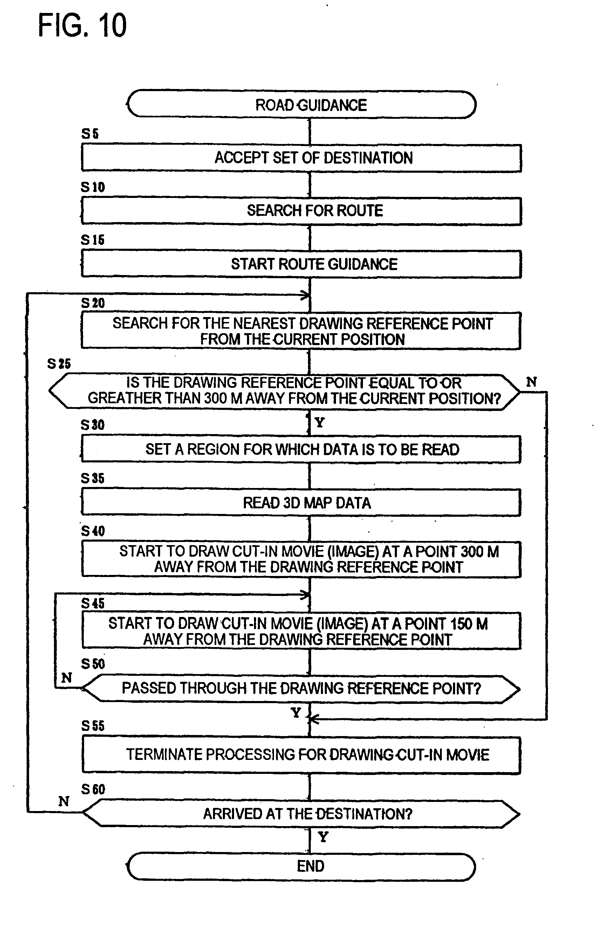

Next, a procedure to provide road guidance by means of the cut-in movie by the navigation apparatus 1 will be described with reference to the flowchart in FIG. 10. The procedure as described below is operated by the CPU 5 in accordance with the road guidance program. First, the navigation apparatus 1 accepts the set of the destination by the driver (Step 5). Next, the navigation apparatus 1 accepts the search for the route to the destination by means of the 2D road data 20 (Step 10) and starts to display the guidance on the guidance screen (Step 15).

The navigation apparatus 1 sets the drawing reference point on, for example, the node in the intersection for which guidance is to be given along the route. In this case, it may be possible to preset conditions to set all of the drawing reference points along the entire route or to set a predetermined number of the drawing reference points in order of distance from the current position and set the rest of points in order with the travel of the vehicle. Or another way to set may be used. Next, the navigation apparatus 1 searches for the closest drawing reference point from the current position (Step 20) and determines whether the drawing reference point is equal to or greater than 300 m away from the current position (Step 25). On the basis of the determination, it is further determined whether there is enough time to generate and display the cut-in movie. In this example, the basis distance is 300 m. However, a shorter or longer distance may be set as the basis distance depending on the information-processing capability of the navigation apparatus 1 and the vehicle speed.

When the distance between the current position and the drawing reference point is less than 300 m (Step 25=NO), the navigation apparatus 1 terminates the cut-in movie drawing processing according to the drawing reference point (Step 55). In this case, the navigation apparatus 1 displays the 2D enlarged image of the intersection for which guidance is to be given instead of the cut-in movie.

When the distance between the current position and the drawing reference point is equal to or greater than 300 m (Step 25=YES), the navigation apparatus 1 sets the region for which data is to be read based on the drawing reference point (Step 30). The navigation apparatus 1 reads only structures which are located within the region for which data is to be read set in Step 30 among all of the structures in the 3D map data 22 (Step 35).

When the vehicle arrives at the point which is 300 m away from the drawing reference point (that is, when the current vehicle position moved up to the point which is 300 m away from the drawing reference point), the navigation apparatus 1 captures an image in the 3D movie which has the viewpoint of the point 150 m short from the drawing reference point and displays the image as the cut-in movie (Step 40). By looking the displayed image, the driver may recognize that the cut-in movie will be displayed in a short time. Further the navigation apparatus 1 may prepare to display the 3D movie during displaying the image. Then when the current vehicle position arrives at the point which is 150 m away from the drawing reference point, the navigation apparatus 1 switches the image to the movie and displays the 3D movie in real time (Step 45).

Next, the navigation apparatus 1 determines whether the vehicle (the current position) passes through the drawing reference point. When the current position has not passed through the drawing reference point (Step 50=NO), the cut-in movie is being displayed. When the current position has passed through the drawing reference point (Step 50=YES), the navigation apparatus 1 terminates the display of the cut-in movie (Step 55). Note that, according to the current embodiment of the invention, the cut-in movie is terminated when the current position has passed through the drawing reference point. However, for example, the display of the cut-in movie may be terminated when the vehicle goes off the route or when the vehicle travels a predetermined distance after passing through the drawing reference point.

Then the navigation apparatus 1 determines whether the vehicle arrives at the destination. When the vehicle has not arrived at the destination (Step 60=NO), the procedure returns to Step 20 and the cut-in movie for the next drawing reference point is generated. When the current position has arrived at the destination, the road guidance is terminated. In the current embodiment of the invention, the region for which data is to be read is limited only along the route, so that it is possible to reduce the amount of the 3D map data 22 on the RAM 7 (FIG. 2) and the memory usage may be reduced.

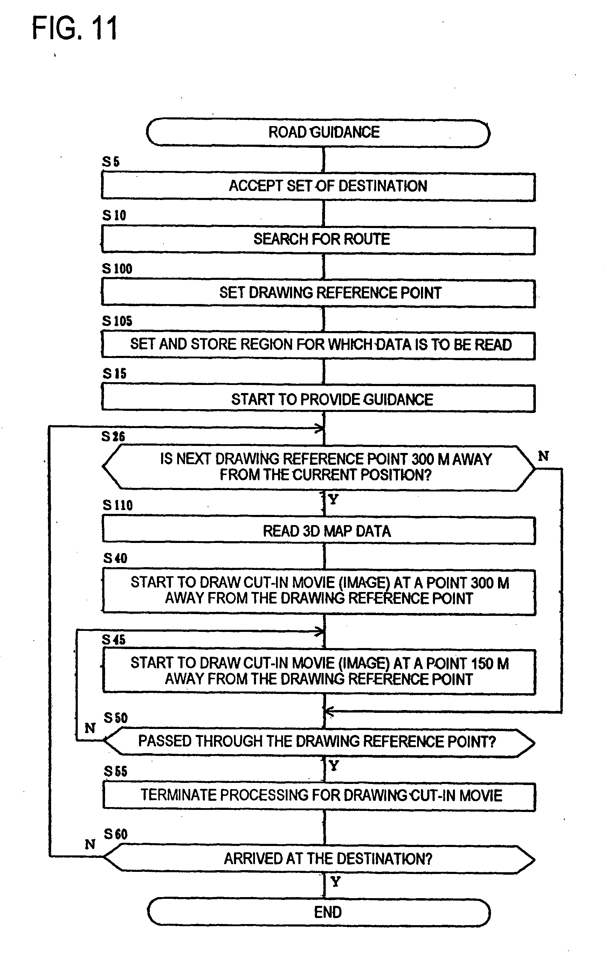

According to the example described above, the navigation apparatus 1 sets the regions for which data is to be read in order along the travel of the vehicle. However, all of the necessary regions for which data is to be read along the entire route may be set and stored at the start of traveling and each of the data may be read out one by one in accordance with the traveling. In this case, the regions for which data is to be read are preset when the route guidance starts being provided, so that the CPU 5 may use the more memory for displaying the cut-in movie during traveling. The procedure in this case will be described with reference to the flowchart in FIG. 11. Note that, the same reference numeral is attached to the processing same as the processing in FIG. 10 and the explanation is simplified.

First, the navigation apparatus 1 accepts the driver to set the destination (Step 5) and searches for the route to the destination (Step 10). Next, the navigation apparatus 1 sets all of the drawing reference points along the entire route (Step 100). The navigation apparatus 1 sets the one region for which data is to be read for the one drawing reference point each and stores the data in the memory such as the RAM 7(FIG. 2) (Step 105). Then the navigation apparatus 1 starts to provide route guidance on the guidance screen (Step 15).

Next, the navigation apparatus 1 determines whether the next drawing reference point (in the case of right after the start of traveling, the first reference point is used) is equal to or greater than 300 m away from the current position (Step 26). When the distance to the next drawing reference point is less than 300 m (Step 26=NO), the navigation apparatus 1 terminates the drawing processing of the cut-in movie for the drawing reference point (Step 55). When the distance to the next drawing reference point is equal to or greater than 300 m (Step 26=YES), the navigation apparatus 1 reads out the region for which data is to be read corresponding to the drawing reference point stored in the memory and reads the 3D map data 22 within the region for which data is to be read among all of the 3D map data (Step 110). The rest of procedures is same as the procedures in the flowchart of FIG. 10.

The outline of the procedures to provide the route guidance with use of the cut-in movie has been described above and more detailed conditions may be set. For example, according to the embodiment described above, when the distance from the current position to the drawing reference point is less than 300 m, the cut-in movie is not generated. However, when the current position arrives at the point which is 300 m away from the drawing reference point and provided that the cut-in movie generating processing has not been terminated (that is, all of 3D map data has not been abstracted yet), it may be possible to set the navigation apparatus 1 not to draw the cut-in movie.

Further, in case that the distance between two adjacent intersections for which guidance is to be given is 150 m or more but not exceeding 300 m, it may be possible to set the navigation apparatus 1 to display the guidance image of the next intersection for which guidance is to be given right after the vehicle passed through the near intersection for which guidance is to be given. According to this situation, when the navigation apparatus 1 successfully draws the cut-in movie at the near intersection for which guidance is to be given, the navigation apparatus 1 provides the 2D enlarged view at the next intersection for which guidance is to be given. When the navigation apparatus 1 does not draw the cut-in movie at the near intersection for which guidance is to be given, the navigation apparatus 1 provides the cut-in movie at the next intersection for which guidance is to be given.

Further, when the distance between the two adjacent intersections for which guidance is to be given is less than 150 m, the navigation apparatus 1 provides the 2D enlarged view at the next intersection for which guidance is to be given regardless of whether the navigation apparatus 1 provided the cut-in movie or the 2D enlarged view at the near intersection for which guidance is to be given. The navigation apparatus 1 may provide regular guidance in a conventional manner according to a roundabout intersection or a passway. Even though examples of various conditions to draw the cut-in movie are described above, such conditions are used when the navigation apparatus 1 has the limited information-processing capability and further when the navigation apparatus 1 provides route guidance by use of as many the cut-in movies as possible. When the navigation apparatus 1 has enough information-processing capability, the navigation apparatus 1 may provide route guidance by use of the cut-in movies at all of the intersections for which guidance is to be given regardless of the distance between the current position and the drawing reference point.

Hereinafter, advantages to be obtained according to the current embodiment will be described.
1) The navigation apparatus 1 sets the region for which data is to be read along the route, so that the amount of the 3D map data to be read in the memory may be reduced.
2) It may be determined whether any structure is located within the region for which data is to be read, so that it may be avoided to read data of unnecessary structures.
3) It may be determined whether the navigation apparatus 1 can draw the cut-in movie or not on the basis of the distance between the current position and the drawing reference point, so that the navigation apparatus 1 may draw the cut-in movie within the information-processing capability of the CPU 5.

A navigation apparatus sets a plurality of region for which data is to be read shaped as rectangle surrounding an intersection for which guidance is to be given along a route. The rectangle-shaped area is set by setting two points on the route and having a straight line which passes through the two points as the center line of the rectangle. The navigation apparatus determines whether there is any structure stored as 3D map data within the region for which data is to be read and reads the data corresponding to the structure if such product exists. More specifically, the regions for which data is to be read are set on the basis of the route first and unnecessary data corresponding to structures out of the region for which data is to be read is not read. Therefore, the navigation apparatus may reduce the memory usage without skipping data necessary for guidance.

## Claims

1. A navigation apparatus (1) for providing route guidance to a preset destination to a driver of a vehicle, comprising
reference point setting means (1) for setting a reference point (50)within an intersection guidance area (44) of an intersection for which guidance is to be given,
point setting means (1) for setting a first point and a second point (50, 52, 53, 62, 67) on the route on the basis of the reference point (50), the first point (50, 52, 53, 62, 67) being located at a first distance away from the reference point and the second point being located a second distance away from the reference point,
region setting means (1) for setting a rectangular region (55, 61, 65, 68) along the route, the region (55, 61, 65, 68) being set on the basis of the set first and second point (50, 52, 53, 62, 67), the center line of the region passing through the first point and the second point (50, 52, 53, 62, 67), and setting the side of the region facing the first point so as to be disposed at a point which is a predetermined distance away from the first point in the travel direction of the vehicle,
map data obtaining means (1) for obtaining 3D map data (22) corresponding to the region (55, 61, 65, 68),
3D movie generating means (1) for generating a 3D movie which has a predetermined viewpoint on the basis of the obtained 3D map data,
display means (1) for displaying the generated 3D movie,
determining means for determining whether any structures represented by the 3D map data are located within the region, wherein
the map data obtaining means obtains the 3D map data representing the structures which were determined to be located within the region by the determining means.

2. The navigation apparatus according to Claim 1, wherein:
the region setting means sets, provided that the first point is set at an intersection, a longer distance between the first point and the side of the region facing the first point than the distance corresponding to another region.

3. The navigation apparatus according to Claim 1 or 2, further comprising:
destination setting means for setting the destination;
route searching means for searching for the route to the destination; and
region storage means for storing data corresponding to a plurality of regions that are set along the searched route by the reference point setting means, the point setting means, and the region setting means, wherein;
the map data obtaining means obtains data corresponding to at least one region among the plurality of region stored in the storage means in accordance with the motion of the current position and further obtains the 3D map data corresponding to the obtained region.

4. The navigation apparatus according to any one of claims 1 to 3, wherein the region setting means (1) gradually extends the center line as the vehicle travels in order of the regions (55, 61, 65), which are before passing the intersection for which guidance is to be given.

5. The navigation apparatus according to any one of claims 1 to 4, wherein the region setting means (1) does not extend the center line for the region (68), which is after passing the intersection for which guidance is to be given.

## Patentansprüche

1. Navigationsvorrichtung (1) zum Bereitstellen einer Routenführung an ein voreingestelltes Ziel für einen Fahrer eines Fahrzeugs, mit:
einer Referenzpunkteinstelleinrichtung (1) zum Einstellen eines Referenzpunktes (50) innerhalb eines Kreuzungsführungsbereichs (44) einer Kreuzung, für die eine Führung bereit zu stellen ist,
einer Punkteinstelleinrichtung (1) zum Einstellen eines ersten Punktes und eines zweiten Punktes (50, 52, 53, 62, 67) auf der Route basierend auf dem Referenzpunkt (50), wobei der erste Punkt bei einer ersten Entfernung von dem Referenzpunkt entfernt liegt und der zweite Punkt bei einer zweiten Entfernung von dem Referenzpunkt entfernt liegt,
einer Bereichseinstelleinrichtung (1) zum Einstellen eines rechteckigen Bereichs (55, 61, 65, 68) entlang der Route, wobei der Bereich (55, 61, 65, 68) basierend auf dem ersten und zweiten Punkt (50, 52, 53, 62, 67), der Mittellinie des Bereichs, der durch den ersten Punkt und den zweiten Punkt (50, 52, 53, 62, 67) verläuft, eingestellt wird, und Einstellen der Seite des Bereichs, der dem ersten Punkt gegenüberliegt, so dass diese an einem Punkt angeordnet ist, der eine vorbestimmte Entfernung von dem ersten Punkt in der Fahrtrichtung des Fahrzeugs entfernt liegt,
einer Kartendatenerbeschaffungseinrichtung (1) zum Beschaffen von 3D-Kartendaten (22) entsprechend dem Bereich (55, 61, 65, 68),
einer 3D-Filmerzeugungseinrichtung (1) zum Erzeugen eines 3D-Films, der einen vorbestimmten Sichtpunkt aufweist, basierend auf den beschafften 3D-Kartendaten,
einer Anzeigeeinrichtung (1) zum Anzeigen des erzeugten 3D-Films,
einer Bestimmungseinrichtung zum Bestimmen, ob irgendwelche Strukturen, die durch die 3D-Kartendaten dargestellt werden, innerhalb des Bereichs liegen, wobei
die Kartendatenbeschaffungseinrichtung die 3D-Kartendaten beschafft, die die Strukturen darstellen, von denen durch die Bestimmungseinrichtung bestimmt wird, dass sie innerhalb des Bereichs liegen.

2. Navigationsvorrichtung gemäß Anspruch 1, wobei:
die Bereichseinstelleinrichtung, vorausgesetzt, dass der erste Punkt an einer Kreuzung eingestellt ist, eine längere Entfernung zwischen dem ersten Punkt und der Seite des Bereichs, die dem ersten Punkt gegenüber liegt, einstellt, als die Entfernung entsprechend dem anderen Bereich.

3. Navigationsvorrichtung gemäß Anspruch 1 oder 2, weiterhin mit:
einer Zieleinstelleinrichtung zum Einstellen des Ziels;
einer Routensucheinrichtung zum Suchen nach der Route zu dem Ziel; und
einer Bereichsspeichereinrichtung zum Speichern von Daten entsprechend einer Vielzahl von Bereichen, die entlang der gesuchten Route durch die Referenzpunkteinstelleinrichtung, die Punkteinstelleinrichtung und die Bereichseinstelleinrichtung eingestellt sind, wobei;
die Kartendatenbeschaffungseinrichtung Daten entsprechend zumindest einem Bereich unter der Vielzahl von Bereichen, die in der Speichereinrichtung gespeichert sind, gemäß der Bewegung der momentanen Position beschafft und weiterhin die 3D-Kartendaten entsprechend dem beschafften Bereich beschafft.

4. Navigationsvorrichtung gemäß einem der Ansprüche 1 bis 3, wobei die Bereichseinstelleinrichtung (1), wenn das Fahrzeug fährt, die Mittellinie in der Reihenfolge der Bereiche (55, 61, 65), die vor der Kreuzung liegen, für die eine Führung bereit zu stellen ist, schrittweise verlängert.

5. Navigationsvorrichtung gemäß einem der Ansprüche 1 bis 4, wobei die Bereichseinstelleinrichtung (1) die Mittellinie für den Bereich (68), der nach der Kreuzung liegt, für den eine Führung bereit zu stellen ist, nicht verlängert.

## Revendications

1. Appareil de navigation (1) destiné à fournir à un conducteur d'un véhicule un guidage d'itinéraire jusqu'à une destination préétablie, comportant
des moyens de détermination de point de référence (1) destinés à déterminer un point de référence (50) dans une zone de guidage d'intersection (44) d'une intersection pour laquelle un guidage doivent être fait,
des moyens de détermination de point (1) destinés à déterminer un premier point et un deuxième point (50, 52, 53, 62, 67) sur l'itinéraire sur la base du point de référence (50), le premier point (50, 52, 53, 62, 67) étant situé à une première distance à l'écart du point de référence et le deuxième point étant situé à une deuxième distance à l'écart du point de référence,
des moyens de détermination de zone (1) destinés à déterminer une zone rectangulaire (55, 61, 65, 68) le long de l'itinéraire, la zone (55, 61, 65, 68) étant déterminée sur la base des premier et deuxième points déterminés (50, 52, 53, 62, 67), la ligne centrale de la zone passant à travers le premier point et le deuxième point (50, 52, 53, 62, 67), et à déterminer le côté de la zone faisant face au premier point de façon à être disposée au niveau d'un point qui est à une distance prédéterminée à l'écart du premier point dans la direction de déplacement du véhicule,
des moyens d'obtention de données de carte (1) destinés à obtenir les données de carte 3D (22) correspondant à la zone (55, 61, 65, 68),
des moyens de génération de film 3D (1) destinés à générer un film 3D qui a un point de vue prédéterminé sur la base des données de carte 3D obtenues,
des moyens d'affichage (1) destinés à afficher le film 3D généré,
des moyens de détermination destinés à déterminer si des structures quelconques représentées par les données de carte 3D sont situées dans la zone,
les moyens d'obtention de données de carte obtenant les données de carte 3D représentant les structures qui ont été déterminées comme étant situées dans la zone par les moyens de détermination.

2. Appareil de navigation selon la revendication 1, dans lequel :
les moyens de détermination de zone déterminent, à condition que le premier point soit déterminé comme étant une intersection, une distance plus longue entre le premier point et le côté de la zone faisant face au premier point que la distance correspondant à une autre zone.

3. Appareil de navigation selon la revendication 1 ou 2, comportant en outre :
Des moyens de détermination de destination destinés à déterminer la destination ;
des moyens de recherche d'itinéraire destinés à rechercher l'itinéraire jusqu'à la destination ; et
des moyens de stockage de zone destinés à stocker des données correspondant à une pluralité de zones qui sont déterminées le long de l'itinéraire recherché par les moyens de détermination de point de référence, les moyens de détermination de point, et les moyens de détermination de zone ;
les moyens d'obtention de données de carte obtenant des données correspondant à au moins une zone parmi la pluralité de zones stockées dans les moyens de stockage en fonction du mouvement de la position courante et obtenant en outre les données de carte 3D correspondant à la zone obtenue.

4. Appareil de navigation selon l'une quelconque des revendications 1 à 3, dans lequel les moyens de détermination de zone (1) étendent progressivement la ligne centrale lorsque le véhicule se déplace dans l'ordre des zones (55, 61, 65), qui sont avant de passer l'intersection pour laquelle un guidage doit être fait.

5. Appareil de navigation selon l'une quelconque des revendications 1 à 4, dans lequel les moyens de détermination de zone (1) n'étendent pas la ligne centrale pour la zone (68), qui est après avoir passé l'intersection pour laquelle un guidage doit être fait.
